(19) Europäisches Patentamt
European Patent Office
Office européen des brevets

(11) EP 2 075 116 B1

(12) **EUROPEAN PATENT SPECIFICATION**

(45) Date of publication and mention of the grant of the patent:
**16.02.2011 Bulletin 2011/07**

(51) Int Cl.:
***B32B 1/08*** *(2006.01)* ***F16L 11/04*** *(2006.01)*

(21) Application number: **08022466.0**

(22) Date of filing: **24.12.2008**

(54) **Refrigerant transporting hose**

Kühlmitteltransportschlauch

Tuyau de transport réfrigérant

(84) Designated Contracting States:
**DE**

(30) Priority: **26.12.2007 JP 2007334392**

(43) Date of publication of application:
**01.07.2009 Bulletin 2009/27**

(73) Proprietor: **TOKAI RUBBER INDUSTRIES, LTD.**
**Komaki-shi,**
**Aichi-ken, 485-8550 (JP)**

(72) Inventor: **Ikemoto, Ayumu**
**Aichi-ken 485-8550 (JP)**

(74) Representative: **Kuhnen & Wacker**
**Patent- und Rechtsanwaltsbüro**
**Prinz-Ludwig-Strasse 40A**
**85354 Freising (DE)**

(56) References cited:
**EP-A- 1 974 903**
**EP-A- 1 975 495**
**DE-A1-102007 055 295**
**JP-A- 2000 018 440**
**US-A1- 2002 074 050**
**US-A1- 2007 048 475**
**US-B1- 6 652 937**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 075 116 B1

Printed by Jouve, 75001 PARIS (FR)

## Description

BACKGROUND OF THE INVENTION

Field of the Invention

The present invention relates to a refrigerant transporting hose such as an air conditioner hose. More particularly, the invention relates to a refrigerant transporting hose for use in transporting a refrigerant (liquid or gas) including carbon dioxide ($CO_2$), chlorofluorocarbons (R-12), CFC substitutes, propane and the like and for use as a piping hose and the like in an automotive engine compartment and the like.

Description of the Background Art

In general, an example of a refrigerant transporting hose for use as a piping hose in an automotive engine compartment includes a rubber hose in terms of the ease of assembly, the suppression of vibration transmission, flexibility and the like. As an example, there has been proposed a rubber hose configured to have a rubber inner layer in the form of a tube through which a refrigerant flows, a reinforcement layer formed on the outer peripheral surface of the inner layer, and a rubber outer layer formed on the outer peripheral surface of the reinforcement layer. Such a rubber hose is disclosed, for example, in Japanese Patent Application Laid-Open No. 7-68659 (199S).

Another hose which has an innermost hose layer made of a polyamide resin (PA) and a still another hose provided with metal foil and a laminate of evaporated metal have been proposed in order to suppress the penetration of a refrigerant such as chlorofluorocarbons (R-12) and CFC substitutes (R-134a and the like) therethrough, i.e., to provide better refrigerant-barrier properties. Such hoses are disclosed, for example, in Japanese Patent Application Laid-Open No. 2001-241572.

Since fluorocarbons (R-12) which have been used as an important refrigerant for an automotive air conditioner and the like lead to the destruction of the ozone layer in the atmosphere, the use of fluorocarbons (R-12) has already been banned. Moreover, CFC substitutes such as R-134a and the like are becoming subject to future emission reductions. In view of the foregoing circumstances, a carbon dioxide ($CO_2$) refrigerant (liquid or gas) which has less adverse effect on the environment has been becoming a predominant air conditioner refrigerant in recent years.

The carbon dioxide refrigerant, however, is more penetrative than conventional refrigerants such as R-134a. Part of the carbon dioxide refrigerant ($CO_2$ gas) flowing through a hose penetrates through even a polyamide 6 (PA6) barrier layer which has been reliable for the conventional refrigerants. For this reason, the use of the conventional refrigerant transporting hose as the carbon dioxide refrigerant transporting hose results in the reduction in cooling performance. A hose provided with a laminate of metal foil and the like, on the other hand, is inferior in flexibility and is disadvantageous in that the laminate is prone to remove after prolonged use. This results in a problem such that the low permeability of the hose to a refrigerant gas is liable to become unstable.

To solve these problems, the present applicant has already proposed a hose including an innermost layer made of a polyamide resin (PA), a low-permeability layer provided on the outer periphery of the above-mentioned innermost layer and made of polyvinyl alcohol (PVOH), and a rubber layer provided on the outer periphery of the above-mentioned low-permeability layer (in Japanese Patent Application No. 2007-140495). This hose is capable of blocking the penetration of a refrigerant gas because of the function of the low-permeability layer (the PVOH layer) formed on the outer periphery of the innermost layer (the PA layer) if the refrigerant gas penetrates through the innermost layer (the PA layer). This hose generally further includes an adhesive layer made of a rubber cement adhesive and the like and formed between the innermost layer and the low-permeability layer for the purposes of enhancing the interlayer adhesion between the innermost layer and the low-permeability layer and ensuring the flexibility of the entire hose.

Depending on the type of rubber cement adhesive, however, there are cases where the adhesive strength becomes poor especially at a high environmental temperature or where delamination, i.e., separation of the layers is caused by the formation of bubbles in the adhesive layer even if the layers adhere to each other. The formation of bubbles in the adhesive layer results from the refrigerant accumulated in the adhesive layer (i.e., the refrigerant flowing through the hose, gasified, penetrating through the PA layer (the innermost layer) to reach the PVOH layer (the low-permeability layer), blocked by the PVOH layer, and then accumulated in the adhesive layer). The above-mentioned formation of bubbles hardly occurs when the hose is in use. If the refrigerant flowing through the hose escapes out of the hose in an accident or during maintenance to cause sudden pressure reduction in the hose, the refrigerant accumulated in the adhesive layer is vaporized (or gasified) abruptly by the pressure reduction (and accordingly under the influence of the environmental temperature) to result in the interlayer bubble formation and the interlayer delamination due to the bubble formation. When such delamination occurs, the innermost layer peels off to clog up the hose, thereby narrowing down the flow passage. This prevents the fluid (or the refrigerant) from flowing through the hose smoothly to give rise to trouble such as failure of air conditioning.

SUMMARY OF THE INVENTION

In view of the foregoing, it is an object of the present invention to provide a refrigerant transporting hose which avoids the formation of bubbles in an adhesive layer due to sudden pressure reduction in the hose during maintenance and the like, which is excellent in interlayer adhesion properties and in flexibility, and which is excellent in low permeability to a refrigerant.

To accomplish the above-mentioned object, the present invention is intended for a refrigerant transporting hose which comprises: an innermost layer consisting primarily of a polyamide resin; a low-permeability layer provided on the outer periphery of the innermost layer and made of polyvinyl alcohol; and a rubber layer provided on the outer periphery of the low-permeability layer, characterized in that an adhesive layers formed at an interface between the innermost layer and the low-permeability layer, the adhesive layer being made of a rubber cement adhesive containing as essential components:

(A) a halogenated butyl rubber;
(B) a phenolic resin;
(C) carbon black;
(D) silica; and
(E) a resin vulcanizing agent.

As mentioned above, since there is still room for improvement in the rubber cement adhesive layer formed between the innermost layer and the low-permeability layer in the proposed hose structure described above, the present inventor has diligently studied to form the rubber cement adhesive layer having sufficient interlayer adhesion properties independently of temperature environment and having a rubber cement strength on a bubble-free level. In the course of the studies, the present inventor has made a finding that the use of an adhesive obtained by adding a phenolic resin, carbon black and the like to a halogenated butyl rubber increases the strength of the adhesive layer to suppress the formation of bubbles in the adhesive layer due to sudden pressure reduction. This has, however, decreased the elongation of the adhesive layer to present a problem such that the flexibility of the hose is impaired. The present inventor, on the other hand, has contemplated a method of enhancing an adhesive component (resorcinol and the like) in the rubber cement adhesive layer. The use of only this method has solved the problem of the interlayer delamination but has presented a problem such that the adhesive layer is prone to be destroyed. As a result of further studies for solution of the above-mentioned problem, the present inventor has found that the further addition of silica to the material of the adhesive layer obtained by adding the phenolic resin, carbon black and the like to the halogenated butyl rubber provides the strength and elongation of the adhesive layer by the action of an OH radical at the surface of the silica. In this manner, the present inventor has found that the above-mentioned composition of the adhesive layer provides desired hose performance, and has attained the present invention.

In this manner, the refrigerant transporting hose according to the present invention comprises the innermost layer consisting primarily of a polyamide resin, the low-permeability layer provided on the outer periphery of the innermost layer, and the rubber layer provided on the outer periphery of the low-permeability layer. The adhesive layer made of the rubber cement adhesive containing a halogenated Butyl rubber, a phenolic resin, carbon black, silica, and a resin vulcanizing agent as essential components is formed at the interface between the innermost layer and the low-permeability layer. This suppresses the formation of bubbles in the adhesive layer which results from sudden pressure reduction in the hose because of degassing during the maintenance of an air conditioner, and the delamination of the adhesive layer. Additionally, the above-mentioned adhesive layer is excellent in strength and in elongation. Thus, the refrigerant transporting hose according to the present invention is excellent in interlayer adhesion properties and in flexibility even in a high-temperature environment. The refrigerant transporting hose according to the present invention has the above-mentioned interlayer adhesion properties to suppress the reduction in cooling performance of the air conditioner which results from the narrowing of the flow passage due to the peeling of the innermost layer, and is further excellent in flexibility as mentioned above, thereby having advantages in piping. The refrigerant transporting hose according to the present invention is excellent in low permeability to a refrigerant gas because of its layer structure to suppress the reduction in cooling performance of the air conditioner and the like which results from refrigerant gas permeation. Additionally, the rubber layer provided on the outer periphery of the low-permeability layer makes the hose excellent in vibrational absorption and in resistance to external mechanical shock. Thus, the refrigerant transporting hose according to the present invention is advantageously used as a piping hose in an automotive engine compartment under severely vibrating conditions.

In particular, the refrigerant transporting hose in which the above-mentioned rubber cement adhesive contains 10 to 30 parts by weight of the silica based upon 100 parts by weight of the halogenated butyl rubber is more excellent in balance between the adhesion properties and the high-temperature physical properties of the adhesive layer.

Additionally, the refrigerant transporting hose in which the above-mentioned rubber cement adhesive contains

10 to 60 parts by weight of the phenolic resin based upon 100 parts by weight of the halogenated butyl rubber is more excellent in balance between the strength and the elongation of the adhesive layer.

Further, the refrigerant transporting hose in which the above-mentioned silica is neutral silica having a pH of 7 to 9 is capable of suppressing the formation of bubbles in the adhesive layer better without impairing the high-temperature adhesion properties of the adhesive layer.

These and other objects, features, aspects and advantages of the present invention will become more apparent from the following detailed description of the present invention when taken in conjunction with the accompanying drawings.

BRIEF DESCRIPTION OF THE DRAWINGS

The single figure is a sectional view showing an example of a refrigerant transporting hose according to the present invention.

DESCRIPTION OF THE PREFERRED EMBODIMENTS

A preferred embodiment according to the present invention will now be described in detail.

A refrigerant transporting hose according to the present invention includes an innermost layer 1, a low-permeability layer 2 provided on the outer periphery of the innermost layer 1, and a rubber layer (including an inner rubber layer 3a and an outer rubber layer 3b) provided on the outer periphery of the low-permeability layer 2, for example, as shown in the single figure. The innermost layer 1 is a layer consisting primarily of a polyamide resin, and the low-permeability layer 2 is a layer made of polyvinyl alcohol. The term "consisting primarily of" as used herein means that the constituent makes up at least 50% of all material of the innermost layer 1, and is to be interpreted as including meaning that the material consists only of the constituent. As shown, an adhesive layer 5 made of a specific rubber cement adhesive is formes at an interface between the innermost layer 1 and the low-permeability layer 2 described above. Although the above-mentioned rubber layer is shown in the single figure as having a double-layer structure including the inner rubber layer 3a and the outer rubber layer 3b, the structure of the rubber layer is not particularly limited. The rubber layer may be comprised of a single layer or at least three layers. The refrigerant transporting hose according to the present invention may further include a reinforcement layer 4, as appropriate, as shown in the single figure.

Examples of the polyamide resin for use as a material of the innermost layer 1 include polyamide 6 (PA6), polyamide 66 (PA66), polyamide 99 (PA99), polyamide 610 (PA610), polyamide 612 (PA612), polyamide 11 (PA11), polyamide 912 (PA912), polyamide 12 (PA12), a copolymer of polyamide 6 and polyamide 66 (PA6/66), a copolymer of polyamide 6 and polyamide 12 (PA16/12), and the like. These polyamide resins are used either alone or in combination. Of these polyamide resins, polyamide 6 is preferably used because of its high interlayer adhesion properties and lower refrigerant permeability.

The above-mentioned polyamide resins may be alloyed. In particular, an alloy of polyamide 6 and polyolefin rubber (e.g., ethylene-propylene-based rubber such as EPM and EPDM) is preferably used as the material of the above-mentioned innermost layer 1 because of its low flexural modulus, high flexibility and high heat resistance. Specific examples of such an alloy include Zytel® ST811 and Zytel® ST811HS both available from DuPont, and the like.

When a polyamide resin is alloyed as described above, there are cases (e.g., when heating and vulcanizing) where an extract (a low-boiling component) present in the alloy reaches and remains on an inner peripheral surface of the low-permeability layer 2 (i.e., the extract penetrates through the above-mentioned adhesive layer 5 to reach and remain on the inner peripheral surface of the low-permeability layer 2), thereby causing interlayer delamination. In such cases, the danger of the interlayer delamination due to the generation of the above-mentioned extract is completely eliminated by one of the following techniques: (1) producing the hose by using an innermost layer material containing a high proportion of polyamide 6 blended with the above-mentioned alloy; and (2) producing the hose by forming the innermost layer 1 by using the above-mentioned alloy, previously heat-treating the innermost layer 1 (at 100˚C to 160˚C for 10 to 300 minutes), cleaning the innermost layer 1 with a solvent (e. g. , with toluene and the like) as required, and then laminating the layers 2 to 5 together on the above-mentioned innermost layer 1.

The material of the innermost layer 1 is not limited to the polyamide resins. An additive including a filler, a plasticizer, an age resister (antioxidant) and the like may be mixed, as appropriate, with the material of the innermost layer 1.

Prior to the formation of the low-permeability layer 2 on the outer periphery of the above-mentioned innermost layer 1, the adhesive layer 5 made of a specific rubber cement adhesive, is formed on the outer peripheral surface of the above-mentioned innermost layer 1, as mentioned above. Specifically, the material of the adhesive layer 5 used herein is a rubber cement adhesive prepared by mixing together a halogenated butyl rubber (component A), a phenolic resin (component B), carbon black (component C), silica (component D) and a resin vulcanizing agent (component E).

Examples of the halogenated butyl rubber serving as the component A used herein include chlorinated butyl

rubber (C1-IIR) and brominated butyl rubber (Br-IIR). These halogenated butyl rubbers are used either alone or in combination.

Examples of the phenolic resin serving as the component B used herein include straight phenolic resin, alkyl phenolic resin, phenolic novolac resin, solvent-type resol, novolac-hexa resin, oil-modified resin and the like. These phenolic resins are used either alone or in combination.

The amount of the phenolic resin (component B) blended in the above-mentioned rubber cement adhesive is preferably in the range of 10 to 60 parts by weight, more preferably in the range of 15 to 55 parts by weight, based upon 100 parts by weight of the halogenated butyl rubber (component A). A setting in such a range provides a better balance between the strength and elongation of the adhesive layer.

The above-mentioned carbon black serving as the component C may be of various grades such as SAF (Super Abrasion Furnace), ISAF (Intermediate Super Abrasion Furnace), HAF (High Abrasion Furnace), MAF (Medium Abrasion Furnace), FEF (Fast Extruding Furnace), GPF (general Purpose Furnace), SRF (Semi Reinforcing Furnace), FT (Fine Thermal) and MT (Medium Thermal) grades, for example. These are used either alone or in combination. Of these, the FEF (Fast Extruding Furnace) carbon black is preferably used in terms of reinforcement, durability and the like.

The amount of the carbon black (component C) blended in the above-mentioned rubber cement adhesive is preferably in the range of 5 to 60 parts by weight, based upon 100 parts by weight of the halogenated butyl rubber (component A).

Preferably, the above-mentioned silica serving as the component D used herein is neutral silica having a pH of 7 to 9 because of its ability to suppress the formation of bubbles in the adhesive layer better without impairing the high-temperature adhesion properties of the adhesive layer. The silica having a pH less than 7 (acid) is prone to exhibit poor high-temperature adhesion properties, and the silica having a pH greater than 9 (alkaline) is prone to cause the formation of bubbles in the adhesive layer.

The amount of the silica (component D) blended in the above-mentioned rubber cement adhesive is preferably in the range of 10 to 30 parts by weight, based upon 100 parts by weight of the halogenated butyl rubber (component A). When the amount of the above-mentioned silica (component D) blended is less than the lower limit, the adhesive layer is insufficient in adhesion properties. When the amount of the above-mentioned silica (component D) blended is greater than the upper limit, on the other hand, the adhesive layer is poor in physical properties at high temperatures.

An example of the above-mentioned resin vulcanizing agent serving as the component E include a reactive alkyl phenolic resin and the like.

The amount of the resin vulcanizing agent (component E) blended in the above-mentioned rubber cement adhesive is preferably in the range of 5 to 15 parts by weight, based upon 100 parts by weight of the halogenated butyl rubber (component A).

The materials of the above-mentioned adhesive layer further include, for example, adhesive components such as resorcinol and melamine, an age resister (antioxidant), a processing aid and the like which are applied, blended and mixed together in addition to the above-mentioned components A to E.

The above-mentioned resorcinol used herein principally functions as an adhesive, and is not limited to resorcinol by itself. Examples of the resorcinol used herein include modified resorcinol-formaldehyde resins, resorcinol, resorcinol-formaldehyde (RF) resins and the like. These are used either alone or in combination.

The above-mentioned melamine used herein principally functions as an adhesion aid, and is not limited to melamine by itself. Examples of the melamine used herein include methylated formaldehyde-melamine polymers, hexamethylenetetramine and the like. These are used either alone or in combination.

As discussed above, polyvinyl alcohol (PVOH) is used as a material of the low-permeability layer 2 formed on the outer periphery of the innermost layer 1, with the adhesive layer 5 of the above-mentioned specific rubber cement adhesive formed between the innermost layer 1 and the low-permeability layer 2. Preferably, polyvinyl alcohol having a degree of saponification of not less than 90% is used. When the low-permeability layer 2 is prepared in the form of a thin layer, it is difficult for polyvinyl alcohol having a degree of saponification of less than 90% to obtain a desired level of low permeation performance especially to a carbon dioxide refrigerant. The degree of saponification of polyvinyl alcohol as represented by the formula:

$$-(CH_2-\underset{\displaystyle OH}{\underset{|}{CH}})_m-(CH_2-\underset{\displaystyle OCOCH_3}{\underset{|}{CH}})_n- \quad \cdots\cdots (1)$$

is determined by substituting the values of m and n in Formula (1) into

$$\text{Degree of Saponification} = [m / (m + n)] \times 100 \qquad (a)$$

The material of the low-permeability layer 2 is dissolved in water or alcohol (methanol, ethanol, isopropyl alcohol, and the like) for use as a coating liquid. In particular, water (hot water at a temperature of about 90˚C to about 95˚C) is preferably used as a solvent in terms of the solubility of the material of the low-permeability layer 2 therein. The coating liquid thus obtained preferably has a viscosity of 10 to 1000000 mPa · s at 25˚C in terms of forming the low-permeability layer 2 having no through holes and obtaining good coating properties (wettability and workability).

An example of the material forming the rubber layer (including the inner rubber layer 3a and the outer rubber layer 3b) on the outer periphery of the low-permeability layer 2 is an appropriate mixture of a vulcanizing agent, carbon black and the like with rubber including halogenated butyl rubbers such as butyl rubber (IIR), chlorinated butyl rubber (C1-IIR) and brominated butyl rubber (Br-IIR), acrylonitrile-butadiene rubber (NBR), chloroprene rubber (CR), ethylene-propylene-diene rubber (EPDM), ethylene-propylene rubber (EPM), fluoro-rubber (FKM), epichlorohydrin rubber (ECO), acrylic rubber, silicone rubber, chlorinated polyethylene rubber (CPE), urethane rubber, and the like. Of these, butyl rubber (IIR) and halogenated butyl rubbers are preferably used because of their lower refrigerant permeability and high resistance to external water. These are used either alone or in combination.

The above-mentioned rubber layer is shown in the single figure as having a double-layer structure including the inner rubber layer 3a and the outer rubber layer 3b. When the rubber layer consists of a plurality of layers (at least two layers), the plurality of layers may be made of the same material or different materials. Additionally, the reinforcement layer 4 may be formed, as appropriate, as shown in the single figure. The reinforcement layer 4 is preferably placed between the inner' rubber layer 3a and the outer rubber layer 3b, as shown, because such an arrangement makes the function of the reinforcement layer 4 sufficiently effective. The reinforcement layer 4 may be formed by spiraling, knitting, braiding or otherwise weaving of a reinforcement yarn made of, for example, polyethylene terephthalate (PET), polyethylene naphthalate (PEN), aramid, polyamide (nylon), polyvinyl alcohol (vinylon), rayon, and metal wire.

The refrigerant transporting hose according to the present invention as shown in the single figure is produced, for example, in a manner to be described below. First, the material of the innermost layer 1, the material of the adhesive layer 5 (the rubber cement adhesive) and the materials of the low-permeability layer 2 (the coating liquid) discussed above are prepared. Next, the above-mentioned material of the innermost layer 1 is extruded in the form of a hose to form the innermost layer 1 having a tubular shape. In this process, a mandrel may be used. Next, the outer peripheral surface of the innermost layer 1 is coated with the above-mentioned material of the adhesive layer 5, and the material of the adhesive layer 5 is dried. Thereafter, the resultant adhesive layer 5 is coated with the above-mentioned coating liquid for the low-permeability layer 2. For example, methods including dipping, spraying, roll coating, brushing and the like may be applied to this coating method. After the coating, a drying process is performed to form the low-permeability layer (a resin coating film) 2 having a specific thickness. After the low-permeability layer 2 is formed in this manner, the rubber layer is extruded onto the outer periphery of the low-permeability layer 2, and the reinforcement layer 4 is formed, as required. (Referring to the single figure, after the inner rubber layer 3a is formed, the reinforcement layer 4 is formed on the outer peripheral surface of the inner rubber layer 3a, and thereafter the outer rubber layer 3b is formed on the outer peripheral surface of the reinforcement layer 4.) Thus, the refrigerant transporting hose having an intended layer structure is produced.

Prior to the formation of the low-permeability layer 2, an etching process including ultraviolet irradiation, plasma treatment, corona discharge and the like may be performed on the outer peripheral surface of the innermost layer 1 as the process of surface preparation for adhesion. Of these etching processes, the plasma treatment is preferably used to roughen the outer peripheral surface of the innermost layer 1 for the purpose of improving the interlayer adhesion properties.

The refrigerant transporting hose according to the present invention preferably has a hose inside diameter ranging from 5 to 40 mm. The innermost layer 1 preferably has a thickness ranging from 0.02 to 2.0 mm.

The above-mentioned adhesive layer 5 preferably has a thickness ranging from 1 to 30 μm The above-mentioned adhesive layer 5 having a thickness of less than 1 μm causes variations in adhesion due to nonuniform coating. On the other hand, the above-mentioned adhesive layer 5 having a thickness of greater than 30 μm deteriorates coating workability.

The above-mentioned low-permeability layer 2 preferably has a thickness ranging from 5 to 100 μm. The above-mentioned low-permeability layer 2 having a thickness of less than 5 μm is poor in low refrigerant permeability. On the other hand, the above-mentioned low-permeability layer 2 having a thickness of greater than 100 μm is rigid and presents some difficulty in the flexibility of the hose to give rise to an apprehension about the occurrence of a crack in the hose.

The rubber layer formed on the outer periphery of the low-permeability layer 2 has thicknesses to be described below. When the rubber layer has a double-layer structure including the inner rubber layer 3a and the outer rubber layer

3b as shown in the single figure, the inner rubber layer 3a preferably has a thickness ranging from 0.5 to 5 mm, and the outer rubber layer 3b preferably has a thickness ranging from 0.5 to 2.0 mm.

The refrigerant transporting hose according to the present invention is preferably used as a hose for transporting a refrigerant including carbon dioxide ($CO_2$) chlorofluorocarbons, CFC substitutes, propane and the like for use in an air conditioner radiator and the like. More preferably, the refrigerant transporting hose according to the present invention is used as a hose for transporting a carbon dioxide refrigerant. The refrigerant transporting hose is preferably used not only in automotive vehicles but also in other transporting machines (industrial transport vehicles such as an airplane, a forklift, a power shovel or excavator and a crane, and railway vehicles).

EXAMPLES

Next, inventive examples will be described in conjunction with comparative examples. It should be noted that the present invention is not limited to the inventive examples to be described below.

Prior to the inventive examples and comparative examples, materials described below were prepared as the materials of the adhesive layer and blended in proportions shown in Table 1. Thus, rubber cement adhesives a to k were prepared.

[Chlorinated Butyl Rubber (Cl-IIR)]
Butyl HT1066 available from JSR Corporation [Carbon Black]
FEF Carbon Black, SEAST SO available from Tokai Carbon Co., Ltd.
[Silica (i)]
Nipsil ER (having a pH of 7 to 8.5) available from Tosoh Silica Corporation
[Silica (ii)]
Nipsil VN3 (having a pH of 5.5 to 6.5) available from Tosoh Silica Corporation
[Silica (iii)]
Carplex #1120 (having a pH of 10. 6) available from Shionogi & Co., Ltd.
[Phenolic Resin]
Sumilite Resin PR-12686 available from Sumitomo Bakelite Co Ltd.
[Zinc Oxide]
Two types of zinc oxide available from Sakai Chemical Industry Co., Ltd.
[Melamine]
Sumikanol 507A available from Taoka Chemical Co. , Ltd.
[Resorcinol]
Sumikanol 620 available from Taoka Chemical Co., Ltd.
[Resin Vulcanizing Agent]
Tackrol 250-III available from Taoka Chemical Co., Ltd.

TABLE 1

| | Rubber Cement Adhesives | | | | | | | | | | |
|---|---|---|---|---|---|---|---|---|---|---|---|
| | a | b | c | d | e | f | g | h | i | j | k |
| Cl-IIR | 100 | 100 | 100 | 100 | 100 | 100 | 100 | 100 | 100 | 100 | 100 |
| Carbon Black | 20 | 20 | 20 | 20 | 20 | 20 | 20 | 20 | 20 | 20 | 60 |
| Silica (i) | 20 | 20 | 10 | 7 | 30 | 40 | - | - | - | - | - |
| silica (ii) | - | - | - | - | - | - | 20 | - | - | - | - |
| Silica (iii) | - | - | - | - | - | - | - | 20 | - | - | - |
| Phenolic Resin | 25 | 50 | 25 | 25 | 25 | 25 | 25 | 25 | 50 | 25 | 50 |
| Zinc Oxide | 5.0 | 5.0 | 5.0 | 5.0 | 5.0 | 5.0 | 5.0 | 5.0 | 5.0 | 5.0 | 5.0 |
| Melamine | 7 | 7 | 7 | 7 | 7 | 7 | 7 | 7 | 7 | 7 | 10 |
| Resorcinol | 7 | 7 | 7 | 7 | 7 | 7 | 7 | 7 | 7 | 7 | 10 |

(continued)

| | Rubber Cement Adhesives | | | | | | | | | | |
|---|---|---|---|---|---|---|---|---|---|---|---|
| | a | b | c | d | e | f | g | h | i | j | k |
| Resin Vulcanizing Agent | 10 | 10 | 10 | 10 | 10 | 10 | 10 | 10 | 10 | 10 | 10 |
| (part by weight) | | | | | | | | | | | |

INVENTIVE EXAMPLE 1

PA6 (nylon 6 1030B available from Ube Industries, Ltd.) was extruded in the form of a hose onto a mandrel (having an outside diameter of 8 mm) made of TPX (a synthetic resin) to form a tubular innermost layer (having a thickness of 0.15 mm). Next, plasma treatment was performed on the outer peripheral surface of the innermost layer to roughen the outer peripheral surface of the innermost layer. Subsequently, an adhesive layer (having a thickness of 10 μm) made of the above-mentioned rubber cement adhesive a was formed on the roughened outer peripheral surface of the innermost layer, and the adhesive layer was coated by dipping with a coating liquid (having a viscosity of 500 mPa·s at 25˚C) obtained by dissolving polyvinyl alcohol (PVOH) (Gohsenol N-300 available from Nippon Synthetic Chemical Industry Co., Ltd.) having a degree of saponification of 99% in hot water at 90˚C. This laminated hose element was placed into and dried in a drying oven. Thus, a coating layer (having a thickness of -10 μm) was formed by the above-mentioned dipping. An inner rubber layer (having a thickness of 1.6 mm) was formed on the outer periphery of the coating layer by the extrusion of a butyl rubber. Thereafter, a reinforcement layer was formed on the outer peripheral surface of the inner rubber layer by braiding of an aramid yarn. Further, an outer rubber layer (having a thickness of 1.0 mm) was formed on the outer peripheral surface of the reinforcement layer by the extrusion of EPDM. After vulcanization, the mandrel was removed from the laminated hose element, and the extruded part of a continuous length was cut. Thus, an intended refrigerant transporting hose was produced (See the single figure).

INVENTIVE EXAMPLES 2-8 AND COMPARATIVE EXAMPLES 1-3

The rubber cement adhesives b to k shown in Table 1 were used in Inventive Examples 2 through 8 and Comparative Examples 1 through 3 in place of the rubber cement adhesive a as the material of the above-mentioned adhesive layer. (Which one of the rubber cement adhesives was used in Inventive Examples 2 through 8 and Comparative Examples 1 through 3 was shown in Table 2 and Table 3 below.) Except for this condition, Inventive Examples 2 through 8 and Comparative Examples 1 through 3 were similar to Inventive Example 1. Thus, an intended refrigerant transporting hose was produced.

Characteristics of the hoses thus produced according to Inventive Examples 1 through 8 and Comparative Examples 1 through 3 were evaluated in accordance with criteria to be described below. The results of the evaluation were presented in Tables 2 and 3 below.

[Normal-State Physical Properties]

A test piece shaped and sized to comply with JIS K 6251 was produced from a sheet obtained by press vulcanization of the adhesive layer material (the rubber cement adhesive) for each hose. By using this test piece, the tensile strength (TS) and elongation ($E_b$) of the adhesive layer in a normal state (at 28 ˚C) were measured in accordance with JIS K 6251.

[High-Temperature Physical Properties]

By using the test piece made of the above-mentioned adhesive layer material, the tensile strength (TS) and elongation ($E_b$) of the adhesive layer at a high temperature (at 150˚C) were measured in accordance with JIS K 6251.

[$CO_2$ Bubble Formation]

A test piece (20 mm x 25 mm x 2 mm thick) having a multi-layer structure identical with the layer structure of each hose was produced.' The test piece was pressure-treated (treated at 35˚C and at 6.5 MPa for five hours) in an autoclave filled with carbon dioxide ($CO_2$ gas. Thereafter, the test piece was taken out of the autoclave, and heated (at 150 ˚C for one hour) under atmospheric pressure. Then, whether bubbles were formed in the adhesive layer of the above-mentioned test piece or not was visually evaluated. An example in which no bubbles were observed was evaluated

as being "good" (indicated by an open circle). An example in which some bubbles were observed but judged to present no problem from a practical standpoint was evaluated as being "relatively poor but acceptable" (indicated by a triangle). An example in which bubbles were observed so pronouncedly that the adhesive layer cannot be put to practical use was evaluated as being "unacceptable" (indicated by a cross).

[Internal Resin Adhesion]

A slit was made with a cutter in a surface of the PA6 layer (internal resin) of the test piece tested for "$CO_2$ Bubble Formation" described above, and interfacial delamination between the adhesive layer and the PVOH layer (i.e., the coating layer) was tried along the slit with nippers. An example in which the interfacial delamination occurred easily was evaluated as being "unacceptable" (indicated by a cross). An example in which the interfacial delamination occurred but firm adhesion therebetween was found was evaluated as being "relatively poor but acceptable" (indicated by a triangle). An example in which the interfacial delamination did not occur but the adhesive layer was destroyed was evaluated as being "good" (indicated by an open circle).

[Delamination and Bubble Formation of Product]

With $CO_2$ sealed in a hose at a low temperature (-35˚C or below), stoppers were placed in openings formed on opposite ends of the hose, and pressure treatment (at 35˚C and at 6.5 MPa for 24 hours) was performed on the hose. Thereafter, the stoppers in the openings formed on opposite ends of the hose were removed to release $CO_2$ from the hose quickly. Then, heating treatment (at 150˚C for one hour) was performed on the hose. After such treatments, the hose was longitudinally cut into halves which in turn were visually evaluated for the delamination of the innermost layer of the hose and for the formation of bubbles in the adhesive layer. An example in which the bubble formation and delamination as described above were not observed was evaluated as being "good" (indicated by an open circle). An example in which the bubble formation and delamination on a level which presents no problem from a practical standpoint were observed partially was evaluated as being "relatively poor but acceptable" (indicated by a triangle). An example in which the bubble formation and delamination were observed substantially entirely was evaluated as being "unacceptable" (indicated by a cross).

TABLE 2

| | | Inventive Examples | | | | | | | |
|---|---|---|---|---|---|---|---|---|---|
| | | 1 | 2 | 3 | 4 | 5 | 6 | 7 | 8 |
| Rubber Cement Adhesive | | a | b | c | d | e | f | g | h |
| Normal-statue Physical Properties | TS (MPa) | 9.0 | 7.6 | 8.0 | 7.6 | 9.5 | 9.4 | 7.9 | 6.3 |
| | $E_b$(%) | 280 | 300 | 270 | 270 | 220 | 190 | 270 | 330 |
| High-Temperature Physical Properties | TS (MPa) | 4.0 | 4.2 | 3.1 | 2.9 | 4.1 | 4.7 | 4.0 | 2.7 |
| | $E_b$ (%) | 150 | 80 | 170 | 140 | 100 | 80 | 150 | 240 |
| $CO_2$ Bubble Formation | | ○ | ○ | ○ | Δ | Δ | Δ | ○ | Δ |
| Internal Resin Adhesion | | ○ | Δ | ○ | ○ | ○ | Δ | Δ | ○ |
| Delamination and Bubble Formation of Product | Evaluation | ○ | Δ | ○ | Δ | ○ | Δ | Δ | Δ |
| | Condition | N.A. * | P.D. ** | N.A. * | P.B. F. *** | N.A. * | P. D. ** | P.D. ** | P.B. F. *** |
| * N.A.: Nothing Abnormal<br>** P.D.: Partial-Delamination<br>*** P.B.F.: Partial Bubble Formation | | | | | | | | | |

TABLE 3

| | | Comparative Examples | | |
|---|---|---|---|---|
| | | 1 | 2 | 3 |
| Rubber Cement Adhesive | | i | j | k |
| Normal-state Physical Properties | TS (MPa) | 8.2 | 7.3 | 11.2 |
| | $E_b$ (%) | 140 | 250 | 60 |
| High-Temperature Physical Properties | TS (MPa) | 3.1 | 2.5 | 5.5 |
| | $E_b$ (%) | 60 | 100 | 30 |
| $CO_2$ Bubble Foundation | | × | × | ○ |
| Internal Resin Adhesion | | × | ○ | × |
| Delamination and Bubble Formation of Product | Evaluation | × | × | × |
| | Condition | Delamination and Bubble Formation | Bubble Formation | Delamination |

The foregoing results showed that all of the articles produced according to Inventive Examples 1 through 8 were hoses which were excellent in internal resin adhesion of the adhesive layer, which exhibited few bubbles formed in the adhesive layer, and which presented no problems for practical use in terms of delamination and bubble formation of the product.

The foregoing results also showed that the articles produced according to Comparative Examples 1 through 3, on the other hand, were hoses which were evaluated as being inferior in either $CO_2$ bubble formation or internal resin adhesion and which presented problems for practical use in terms of delamination and bubble formation of the product.

The refrigerant transporting hose according to the present invention is preferably used as a hose for transporting a refrigerant including carbon dioxide ($CO_2$), chlorofluorocarbons, CFC substitutes, propane and the like for use in an air conditioner radiator and the like.

Although a specific form of embodiment of the instant invention has been described above and illustrated in the accompanying drawings in order to be more clearly understood, the above description is made by way of example and not as a limitation to the scope of the instant invention. It is contemplated that various modifications apparent to one of ordinary skill in the art could be made without departing from the scope of the invention which is to be determined by the following claims.

## Claims

**1.** A refrigerant transporting hose comprising: an innermost layer consisting primarily of a polyamide resin; a low-permeability layer provided on the outer periphery of said innermost layer and made of polyvinyl alcohol; and a rubber layer provided on the outer periphery of said low-permeability'layer, **characterized in that** an adhesive layer is formed at an interface between said innermost layer and said low-permeability layer, said adhesive layer being made of a rubber cement adhesive containing as essential components:

(A) a halogenated butyl rubber;
(B) a phenolic resin;
(C) carbon black;
(D) silica; and
(E) a resin vulcanizing agent.

**2.** The refrigerant transporting hose according to claim 1, wherein said rubber cement adhesive contains 10 to 30 parts by weight of said silica (D), based upon 100 parts by weight of said halogenated butyl rubber (A).

**3.** The refrigerant transporting hose according to claim 1 or 2, wherein said rubber cement adhesive contains 10 to 60 parts by weight of said phenolic resin (B), based upon 100 parts by weight of said halogenated butyl rubber (A)

**4.** The refrigerant transporting hose according to any one of claims 1 to 3, wherein said silica (D) is neutral silica having

a pH of 7 to 9.

5. The refrigerant transporting hose according to any one of claims 1 to 4, wherein said rubber cement adhesive contains resorcinol and melamine.

6. The refrigerant transporting hose according to any one of claims 1 to 5, said refrigerant transporting hose being a hose for transporting a carbon dioxide ($CO_2$) refrigerant.

## Patentansprüche

1. Kühlmittel-Förderschlauch umfassend:

   eine innere hauptsächlich aus einem Polyamidharz bestehende Schicht;
   eine Schicht geringer Permeabilität, die auf dem äußeren Umfang der inneren Schicht bereitgestellt wird und aus Polyvinylalkohol besteht; und eine Gummischicht, die auf dem äußeren Umfang der Schicht geringer Permeabilität bereitgestellt wird, **dadurch gekennzeichnet, dass** eine Haftmittelschicht an der Grenzfläche zwischen der inneren und der Schicht geringer Permeabilität gebildet wird, wobei die Haftmittelschicht aus einem Haftmittel aus Gummiklebstoff besteht, das als Wesentliche Bestandteile folgendes enthält:

   (A) einen halogenierten Butylgummi;
   (B) ein Phenolharz;
   (C) Ruß;
   (D) Siliciumdioxid;
   (E) ein Harz-Vulkanisationsmittel.

2. Kühlmittel-Förderschlauch nach Anspruch 1, wobei das Haftmittel aus Gummiklebstoff 10 bis 30 Gewichtsanteile des Siliciumdioxids (D), basierend auf 100 Gewichtsanteilen des halogenierten Butylgummis (A) enthält.

3. Kühlmittel-Förderschlauch nach Anspruch 1 oder 2, wobei das Haftmittel aus Gummiklebstoff 10 bis 60 Gewichtsanteile des Phenolharzes (B), basierend auf 100 Gewichtsanteilen des halogenierten Butylgummis (A) enthält.

4. Kühlmittel-Förderschlauch nach einem der Ansprüche 1 bis 3, wobei das Siliciumdioxid (D) neutrales Siliciumdioxid mit einem pH von 7 bis 9 ist.

5. Kühlmittel-Förderschlauch nach einem der Ansprüche 1 bis 4, wobei das Haftmittel aus Gummiklebstoff Resorcinol und Melamin enthält.

6. Kühlmittel-Förderschlauch nach einem der Ansprüche 1 bis 5, wobei der Kühlmittel-Förderschlauch ein Schlauch zum Fördern von Kohlendioxid ($CO_2$)-Kühlmittel ist.

## Revendications

1. Tuyau de transport de réfrigérant comprenant :

   une couche la plus interne composée principalement d'une résine polyamide ; une couche de faible perméabilité disposée sur la périphérie extérieure de ladite couche la plus interne et composée de poly(alcool de vinyle) ; et une couche de caoutchouc disposée sur la périphérie extérieure de ladite couche de faible perméabilité, **caractérisé en ce qu'**une couche adhésive est formée sur une interface entre ladite couche la plus interne et ladite couche de faible perméabilité, ladite couche adhésive étant composée d'un adhésif à base de colle de caoutchouc contenant comme composants essentiels :

   (A) un butylcaoutchouc halogéné ;
   (B) une résine phénolique ;
   (C) du noir de carbone ;
   (D) de la silice ; et
   (E) un agent de vulcanisation de résine.

2. Tuyau de transport de réfrigérant selon la revendication 1, dans lequel ledit adhésif à base de colle de caoutchouc contient 10 à 30 parties en poids de ladite silice (D), sur la base de 100 parties en poids dudit butylcaoutchouc halogéné (A).

3. Tuyau de transport de réfrigérant selon la revendication 1 ou 2, dans lequel ledit adhésif à base de colle de caoutchouc contient 10 à 60 parties en poids de ladite résine phénolique (B), sur la base de 100 parties en poids dudit butylcaoutchouc halogéné (A).

4. Tuyau de transport de réfrigérant selon l'une quelconque des revendications 1 à 3, dans lequel ladite silice (D) est une silice neutre ayant un pH allant de 7 à 9.

5. Tuyau de transport de réfrigérant selon l'une quelconque des revendications 1 à 4, dans lequel ledit adhésif à base de colle de caoutchouc contient du résorcinol et de la mélamine.

6. Tuyau de transport de réfrigérant selon l'une quelconque des revendications 1 à 5, ledit tuyau de transport de réfrigérant étant un tuyau servant à transporter un réfrigérant à base de dioxyde de carbone ($CO_2$).

Figure

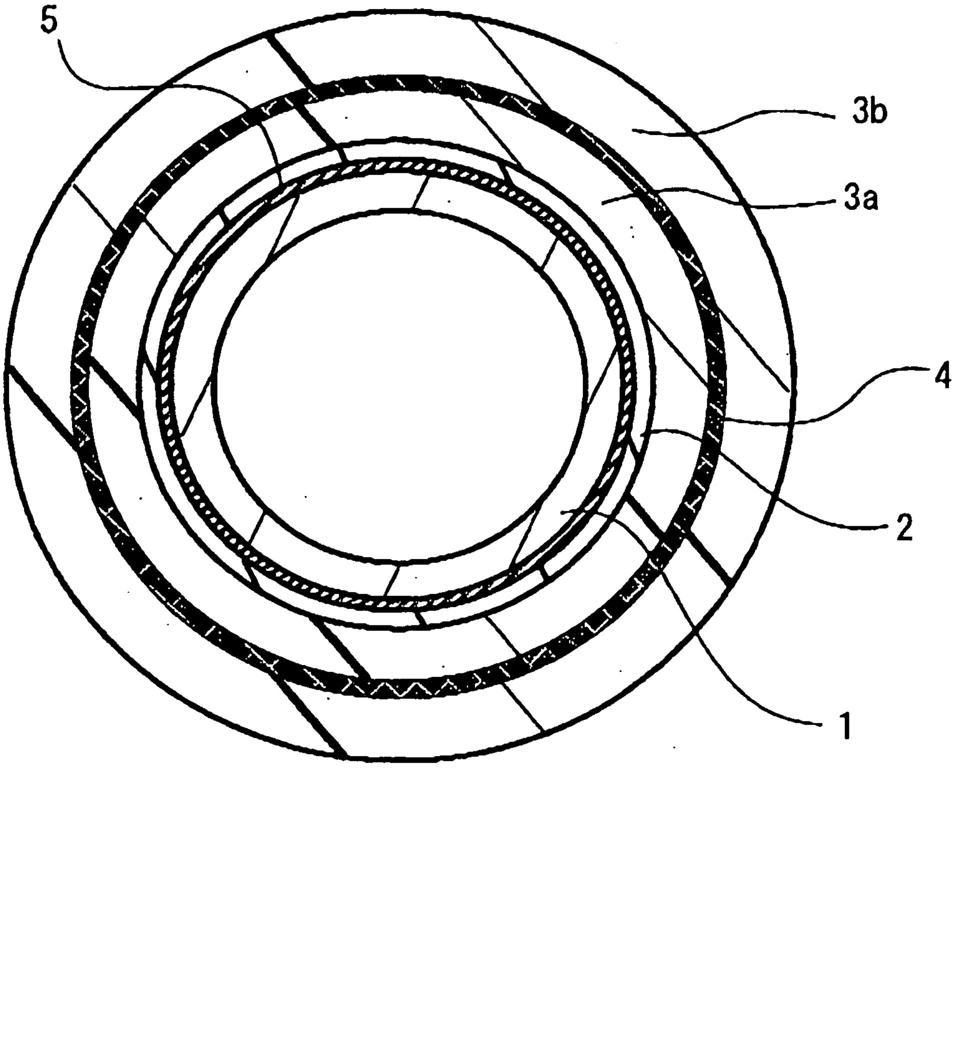

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 768659199S B
- JP 2001241572 A
- JP 2007140495 A